# EUROPÄISCHE PATENTSCHRIFT

(11) **EP 2 276 642 B1**
(45) Veröffentlichungstag und Bekanntmachung des Hinweises auf die Patenterteilung: **09.07.2014**
(21) Anmeldenummer: 08758037.9
(22) Anmeldetag: 06.05.2008
(51) Int. Cl.: B60J 7/043

(54) **FAHRZEUGDACH MIT DACHÖFFNUNGSSYSTEM**
VEHICLE ROOF HAVING ROOF OPENING SYSTEM
PAVILLON DE VÉHICULE AVEC SYSTÈME D'OUVERTURE

(43) Veröffentlichungstag der Anmeldung: 26.01.2011
(73) Patentinhaber: Webasto SE, 82131 Stockdorf (DE)
(72) Erfinder: HÖLZEL, Dominik, 82194 Gröbenzell (DE)
(74) Vertreter: advotec.
(86) Internationale Anmeldenummer: PCT/DE2008/000778
(87) Internationale Veröffentlichungsnummer: WO 2009/135450

(56) Entgegenhaltungen:
- EP-A- 1 834 820
- DE-A1- 3 532 111
- DE-A1-102005 059 287
- DE-C1- 19 958 523
- JP-A- 58 085 713

## Beschreibung

Die Erfindung betrifft ein Fahrzeugdach mit einem Dachöffnungssystem gemäß dem Oberbegriff des Patentanspruchs 1.

Ein derartiges Fahrzeugdach ist aus der Praxis bekannt und umfasst insbesondere ein Dachöffnungssystem, das als so genanntes außen laufendes Schiebedach ausgebildet ist. Bei einem solchen Schiebedach wird eine Dachöffnung mittels eines Deckelelements wahlweise verschlossen oder freigegeben, das zum Erreichen seiner Öffnungsstellung über einen heckseitigen festen Dachbereich verfahren wird. Das Deckelelement ist beidseits einer Fahrzeugslängsebene jeweils mit einem vorderen und einem hinteren Gleitelement versehen. Die vorderen Gleitelemente sind jeweils mit einem drucksteifen Antriebskabel verbunden, das von einem Antriebsmotor angetrieben wird. Die hinteren Gleitelemente laufen bei der Öffnungsbewegung passiv mit. Die vorderen Gleitelemente sind in Führungsschienen geführt, die in einem Trockenbereich liegen, der durch eine die Dachöffnung umschließende Trenneinrichtung von einem Nassbereich getrennt ist. Die hinteren Gleitelemente sind in Führungsschienen geführt, die in diesem Nassbereich liegen. Zur Ausführung einer Ausstellbewegung des Deckelelements bei dessen Öffnungsbewegung umfasst die Betätigungsmechanik des Dachöffnungssystems des Weiteren so genannte Hilfshebel, die innerhalb des Trockenbereichs in korrespondierenden Führungsschienen geführt sind und beim Zurückfahren des Deckelelements unter der den Trockenbereich von dem Nassbereich trennenden Trenneinrichtung durchtauchen. Im Heckbereich des Deckelelements sind also zwei Mechanikbaugruppen erforderlich, und zwar eine, welche innerhalb der Trenneinrichtung im Trockenbereich liegt und die den Hilfshebel darstellt, und eine, an die die Bewegung des Deckelelements außerhalb des Trennelements übergeben wird und die im Nassbereich angeordnet ist.

Bei dem vorstehend beschriebenen Dachöffnungssystem liegt der angetriebene Teil der Mechanik also im Trockenbereich. Dies liegt darin begründet, dass ein Antriebsmotor und die zugehörige Elektronik nicht für den Nassbereich ausgelegt sind und eine Abdichtung der Elektronik teuer und aufwändig wäre. Des Weiteren sind die Antriebskabel mit spiralförmigen Steigungskabeln umwickelt, damit an diesen ein von dem Antriebsmotor angetriebenes Ritzel eingreifen und das Drehmoment des Antriebsmotors in eine Schubkraft umgesetzt werden kann. Die drucksteifen Antriebskabel können nicht effektiv gegen Wasser abgedichtet werden.

Bei dem beschriebenen Dachöffnungssystem besteht des Weiteren der Nachteil, dass die Führungsschienen für die vorderen Gleitelemente und die Führungsschienen für die hinteren Gleitelemente in Fahrzeugquerrichtung zueinander versetzt sind. Dies geht zu Lasten der maximalen Abmessungen der Dachöffnung in Fahrzeugquerrichtung. Aufgrund der notwendigen Deckelüberstände vor und hinter der Trenneinrichtung zwischen dem Nassbereich und dem Trockenbereich und den geforderten Deckelöffnungen ist die gesamte Dachöffnung des betreffenden Fahrzeugs zwischen dem bugseitigen Dachrahmenbereich und dem heckseitigen Dachrahmenbereich zu kurz, um die Führungsschienen der vorderen Gleitelemente und die Führungsschienen der hinteren Gleitelemente in einer Linie anzuordnen.

Die Ausstellbewegung des Deckelelements in eine Lüfterstellung erfolgt bei bisher bekannten Dachöffnungssystemen der einleitend beschriebenen Art in der Regel mittels Hebel, Schlitten mit Hebel oder dergleichen, die im Bereich der Deckelelementhinterkante im Trockenbereich liegen, da das Deckelelement nur innerhalb der Hauptdichtung bzw. des Trennelements angetrieben werden kann. Dies hat zur Folge, dass der bugseitige Teil der Antriebsmechanik entweder vor einem hinteren heckseitigen Ausstellelement stehen bleiben muss oder der bugseitige Teil der Antriebsmechanik neben das heckseitige Ausstellelement fahren muss, was zu Lasten der Abmessungen der Dachöffnung in Fahrzeugquerrichtung geht, oder dass - wie bei dem einleitend beschriebenen Stand der Technik - das heckseitige Ausstellelement unter dem Trennelement bzw. der Hauptdichtung hindurch fahren muss, was wiederum zu Lasten der Kopffreiheit im Fahrzeuginnenraum geht.

Des Weiteren wird durch den Versatz der hintereinander angeordneten Führungsschienen zueinander in Fahrzeugquerrichtung Bauraum benötigt, der in Fahrzeugdächem bisweilen nur schwer darstellbar ist. Durch die Überlappung der hinteren und der vorderen Führungsschiene in Fahrzeuglängsrichtung konnte bisher nur ein den Mindestanforderungen genügendes Versteifungselement vorgesehen werden, das die beiden Dachränder miteinander verbindet, da ein solches ansonsten die Mechanikhauptebene durchstoßen würde. Daher wird bei den bekannten Konstruktionen das Versteifungselement unter den Führungsschienen vorbeigeführt. Dieses Versteifungselement ist aber aufgrund des knappen Bauraums im Kopfbereich bisher sehr flach ausgeführt, was wiederum zu Lasten der Biegesteifigkeit des Versteifungselements geht.

Aus der Druckschrift JP 58085713 ist ein Fahrzeugdach bekannt, das mit einem Dachöffnungssystem versehen ist. Dieses Dachöffnungssystem umfasst ein Deckelelement, mittels dessen eine Dachöffnung wahlweise verschlossen oder zumindest teilweise freigegeben werden kann und das in der Schließstellung mit einem Dichtelement zusammenwirkt, das als Trenneinrichtung aufgefasst werden kann, die einen Nassbereich von einem Trockenbereich trennt. Das Deckelelement weist bezogen auf eine vertikale Fahrzeuglängsmittelebene beidseits ein vorderes Gleitelement auf, das an einer betreffenden Führungsschiene geführt ist und das im Trockenbereich liegt. Am heckseitigen Rand weist das Deckelelement beidseits jeweils ein mittels eines Antriebsmotors angetriebenes Zahnrad auf, das in eine dachfeste, gekrümmte Zahnstange eingreift.

Der Erfindung liegt die Aufgabe zugrunde, ein Fahrzeugdach der einleitend genannten Gattung zu schaffen, welches hinsichtlich der Querabmessungen der Dachöffnung optimiert und kostengünstig ausgerührt werden kann.

Diese Aufgabe ist erfindungsgemäß durch das Fahrzeugdach mit den Merkmalen des Patentanspruchs 1 gelöst.

Der Kern der Erfindung besteht mithin darin, dass nicht nur das vordere Gleitelement, sondern auch das hintere Gleitelement mit einer Antriebseinrichtung gekoppelt ist, so dass beim Verfahren bzw. beim Öffnen des Deckelelements sowohl die vorderen Gleitelemente als auch die hinteren Gleitelemente ohne direkte Kopplung zueinander aktiv angetrieben werden. Durch das aktive Antreiben der hinteren Gleitelemente kann der einleitend beschriebene Hilfshebel zum Ausführen der Ausstellbewegung des Deckelelements entfallen, so dass auch eine Führungsbahn bzw. Führungseinrichtung für den Hilfshebel entfallen kann, welche sich in den heckseitig der Dachöffnung angeordneten, festen Dachbereich erstreckt. Damit ist es möglich, für den Trockenbereich, das heißt für die vorderen Gleitelemente jeweils im Vergleich zum Stand der Technik eine kürzere Führungsschiene vorzusehen. Es erfolgt also auch ein Antrieb des Deckelelements im Nassbereich, da die hinteren Gleitelemente in diesem angeordnet sind.

Um eine Synchronisierung der Bewegung der hinteren und der vorderen Gleitelemente zu erreichen, sind die hinteren Gleitelemente und die vorderen Gleitelemente jeweils mittels eines gemeinsamen Antriebsmotors angetrieben.

Bei einer bevorzugten Ausführungsform des Fahrzeugdachs nach der Erfindung sind die hinteren Gleitelemente jeweils mit einem drucksteifen Antriebskabel verbunden, das mit der Antriebseinrichtung gekoppelt ist. Alternativ ist es auch denkbar, dass die Gleitelemente jeweils mit einer Antriebsstange oder dergleichen gekoppelt sind, welche eine Verschiebung des betreffenden hinteren Gleitelements in der zugeordneten zweiten Führungseinrichtung bewirkt.

Bei einer zweckmäßigen Ausführungsform des Fahrzeugdachs nach der Erfindung liegt der Antriebsmotor im Trockenbereich, wobei er eine Antriebswelle aufweist, die in gedichteter Weise zum Antrieb der hinteren Gleitelemente in den Nassbereich geführt ist. Die Antriebswelle kann auch einem Getriebe zugeordnet sein, das mit dem Antriebsmotor gekoppelt ist.

Zum gemeinsamen Antrieb der hinteren und der vorderen Gleitelemente mittels dieses Antriebsmotors sitzen auf der Antriebswelle vorzugsweise ein erstes, im Trockenbereich angeordnetes Ritzel zum Antrieb der vorderen Gleitelemente und ein zweites, im Nassbereich angeordnetes Ritzel zum Antrieb der hinteren Gleitelemente, wobei zwischen dem ersten und dem zweiten Ritzel eine Rotationsdichtung angeordnet ist. Die Rotationsdichtung dichtet den Trockenbereich zuverlässig gegenüber dem Nassbereich hinsichtlich Nässe und Schmutz ab.

Bei einer speziellen Ausführungsform des Fahrzeugdachs nach der Erfindung sind die vorderen Gleitelemente und die hinteren Gleitelemente beim Verstellen des Deckelelements mit unterschiedlichen Geschwindigkeiten angetrieben. Dies hat den Vorteil, dass die Führungseinrichtungen, die den hinteren Gleitelementen zugeordnet sind, kürzer ausgebildet sein können als die Führungseinrichtungen, die den vorderen Gleitelementen zugeordnet sind. Jedoch sind dann zum Ausgleich der unterschiedlichen Bewegungsgeschwindigkeiten Wegausgleichseinrichtungen vorzusehen.

Die Wegausgleichseinrichtungen können beispielsweise durch Führungsschienen gebildet sein, die an dem Deckelelement ausgebildet sind und an denen jeweils ein mit dem jeweiligen hinteren Gleitelement verbundenes Hebelelement geführt ist. Diese Führungsschienen führen dann gegenüber den hinteren dachfesten Führungsschienen beim Verfahren des Deckelelements eine Relativbewegung aus.

Durch die unterschiedlichen Bewegungsgeschwindigkeiten der Mechanik im Trockenbereich und der Mechanik im Nassbereich entsteht also eine Relativbewegung zwischen diesen beiden Mechaniken. Dies kann beispielsweise durch unterschiedliche Ritzelgrößen für die Antriebskabel der hinteren Gleitelemente und der vorderen Gleitelemente erreicht werden. Die Relativbewegung kann also auch dazu genutzt werden, dass die hinteren Führungseinrichtungen verkürzt werden bzw. auf mehrere Führungseinheiten aufgeteilt wird, die eine Relativbewegung zueinander ausführen. Durch die Verkürzung der hinteren Führungseinrichtung wird die Gesamtlänge der Mechanik verkürzt. Durch die Verkürzung der Mechanik können die vorderen und die hinteren Führungseinrichtungen in den beidseitigen Randbereichen des Dachöffnungssystems auch jeweils in einer Linie gelegt werden.

Ferner kann durch die Verkürzung der hinteren Führungseinrichtungen erreicht werden, dass Gleitelemente in einem Bereich des Fahrzeugdachs zum Stehen kommen, in dem die Designlinie noch gerade verläuft. Die Fugenlinie in Verlängerung der Mechanik kann damit ungehindert der Designlinie folgen.

Durch die kurze Ausbildung der hinteren Führungseinrichtungen ist es auch möglich, zwischen den ersten Führungseinrichtungen und den zweiten Führungseinrichtungen in einem Zwischenraum ein Dachversteifungselement anzuordnen, das sich in Fahrzeugquerrichtung erstreckt und eine hohe Biegesteifigkeit hat. Es steht also genug Bauraum hierfür zur Verfügung.

Die Trenneinrichtung, die den Nassbereich von dem Trockenbereich trennt, ist vorzugsweise ein Dichtprofil, das an der Unterseite des Deckelelements oder dachfest ausgebildet ist. Es sind aber auch beliebige andere Trenn- bzw. Dichteinrichtungen denkbar, die den Trockenbereich von dem Nassbereich trennen, wie beispielsweise ein Wassergraben oder dergleichen.

Des Weiteren können die hinteren Führungseinrichtungen jeweils mit einer Höheneinstelleinrichtung versehen sein, die vorzugsweise mindestens eine Einstellschraube und/oder eine Unterlegscheibe umfasst. Damit kann durch die Positionierung der hinteren Führungsschienen die Lage des Deckelelements an die festen Dachabschnitte angepasst werden.

Weitere Vorteile und vorteilhafte Ausgestaltungen des Gegenstandes der Erfindung sind der Beschreibung, der Zeichnung und den Patentansprüchen entnehmbar.

Drei Ausführungsbeispiele eines Fahrzeugdachs nach der Erfindung sind schematisch vereinfacht dargestellt und werden in der nachfolgenden Beschreibung näher erläutert. Es zeigt:
- Fig. 1: eine Draufsicht auf ein Fahrzeugdach mit einem erfindungsgemäß ausgebildeten Dachöffnungssystem;
- Fig. 2: eine Seitenansicht des Fahrzeugdachs nach Fig. 1 mit einem Deckelelement in Schließstellung;
- Fig. 3: eine Fig. 2 entsprechende Ansicht, jedoch mit teilgeöffneter Dachöffnung;
- Fig. 4: eine Fig. 2 entsprechende Ansicht, jedoch mit Deckelelement in maximaler Öffnungsstellung;
- Fig. 5: eine schematische Ansicht einer Antriebseinrichtung für das Deckelelement;
- Fig. 6: eine Draufsicht auf eine zweite Ausführungsform eines im Sinne der Erfindung ausgebildeten Fahrzeugdachs;
- Fig. 7: eine Seitenansicht des Fahrzeugdachs nach Fig. 6; und
- Fig. 8: eine Draufsicht auf eine dritte Ausführungsform.

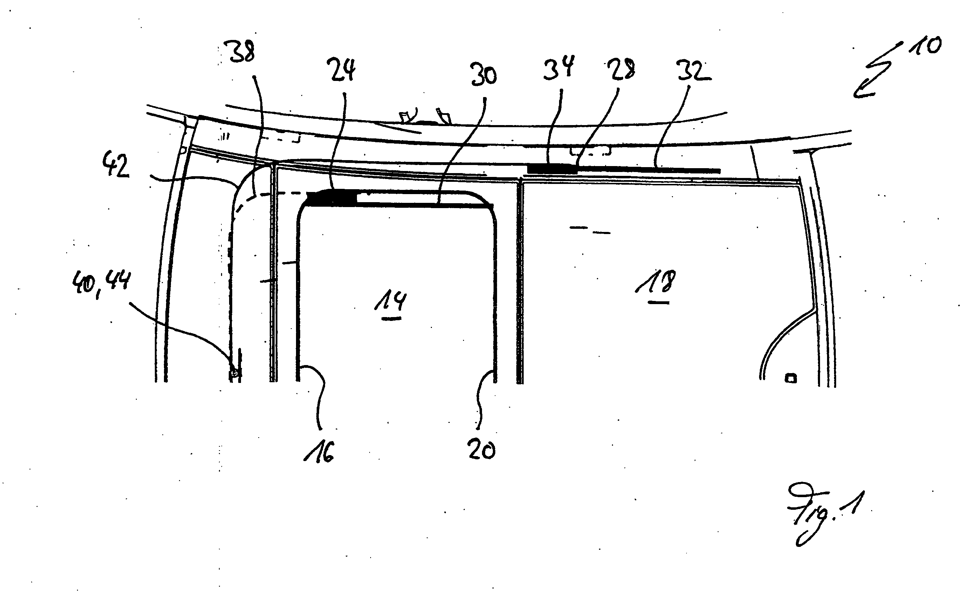

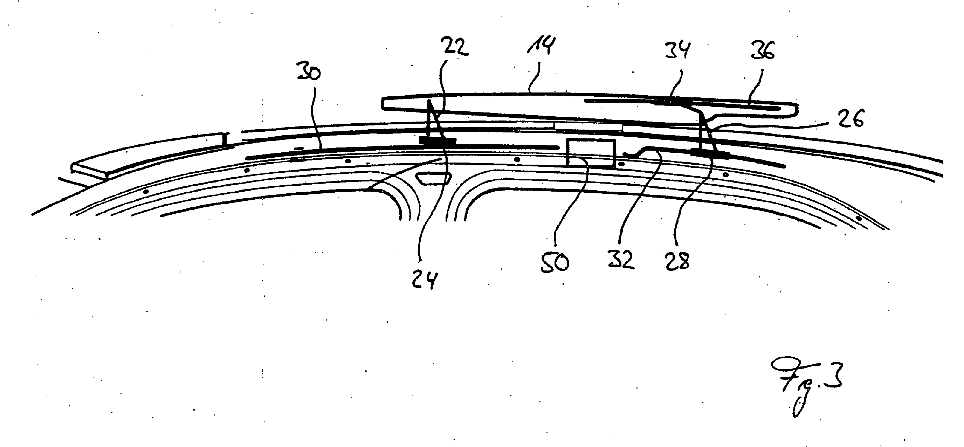

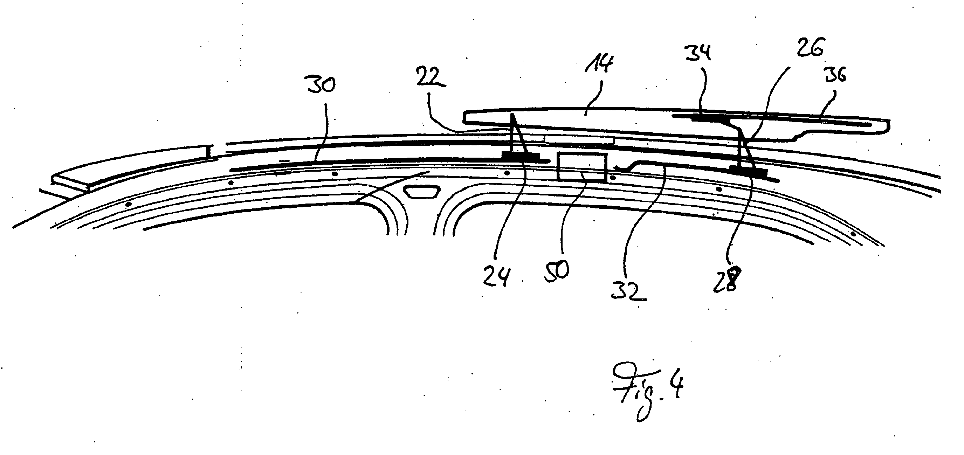

In den Figuren 1 bis 5 ist ein Fahrzeugdach 10 dargestellt, das mit einem Dachöffnungssystem 12 versehen ist, das ein Deckelelement 14 aufweist, mittels dessen eine Dachöffnung 16 wahlweise verschlossen oder zumindest teilweise freigegeben werden kann und das als so genanntes außen laufendes Schiebedach ausgebildet ist, welches mithin beim Verfahren in Öffnungsstellung über einen heckseitigen festen Dachabschnitt 18 verfahren wird.

Das Dachöffnungssystem 12 umfasst ein Dichtprofil 20, das eine so genannte Topdichtung bildet, mit der das Deckelelement 14 in Schließstellung zusammenwirkt und die einen Trockenbereich T von einem Nassbereich N des Dachöffnungssystems 12 trennt.

Das Deckelelement 14 ist bezogen auf eine Fahrzeuglängsmittelebene beidseits über einen vorderen Ausstellhebel 22 mit einem vorderen Gleitelement 24 sowie über einen hinteren Ausstellhebel 26 mit einem hinteren Gleitelement 28 verbunden. Das vordere Gleitelement 24 ist in einer vorderen Führungsschiene 30 geführt, welche im Trockenbereich des Dachöffnungssystems im Bereich der Dachöffnung 16 entlang von deren seitlichen Rändern angeordnet ist. Die hinteren Gleitelemente 28 sind jeweils in einer hinteren Führungsschiene 32 geführt, die in einem bezogen auf die Fahrzeuglängsmittelebene seitlichen Randbereich des festen Dachabschnitts 18 angeordnet ist und mithin im Nassbereich des Dachöffnungssystems 12 liegt.

Das dem hinteren Gleitelement 28 abgewandte Ende des jeweiligen hinteren Ausstellhebels 26 ist mit einem Gleiter 34 verbunden, der an einer deckelelementfesten, sich ebenfalls in Fahrzeuglängsrichtung erstreckenden Führungsschiene 36 geführt ist.

Die vorderen Gleitelemente 24 sind jeweils mit einem ersten drucksteifen Antriebskabels 38 verbunden, welches wiederum mittels eines im Trockenbereich des Dachöffnungssystems 12 angeordneten, ersten Antriebsritzels 40 angetrieben ist. Die hinteren Gleitelemente 28 sind jeweils mit einem zweiten Antriebskabel 42 verbunden, welches mittels eines zweiten Antriebsritzels 44 angetrieben ist, das im Nassbereich des Dachöffnungssystems 12 liegt.

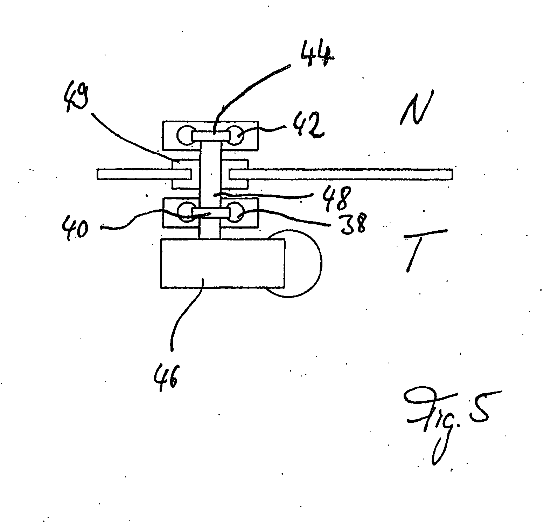

Wie Fig. 5 zu entnehmen ist, weist das Dachöffnungssystem 12 einen Antriebsmotor 46 auf, der mit einer Antriebswelle 48 versehen ist und der im Trockenbereich T des Dachöffnungssystems 12 angeordnet ist. Auf der Antriebswelle 48 sitzen das erste Antriebsritzel 40 für die Antriebskabel 38 der vorderen Gleitelemente 24 und das zweite Antriebsritzel 44 für die Antriebskabel 42 der hinteren Gleitelemente 28. Das Antriebsritzel 44 ist im Nassbereich N des Öffnungssystems angeordnet. Zur Dichtung des Trockenbereichs T gegenüber dem Nassbereich N ist eine die Antriebswelle umgreifende Rotationsdichtung vorgesehen, die im Bereich eines Schiebedachrahmens angeordnet ist, die von der Antriebswelle 48 durchgriffen ist.

Zwischen den hinteren Führungsschienen 32 und den vorderen Führungsschienen 30, die in Fahrzeuglängsrichtung jeweils voneinander beabstandet sind, ist des Weiteren ein Versteifungselement 50 angeordnet, das sich in Fahrzeugquerrichtung erstreckt.

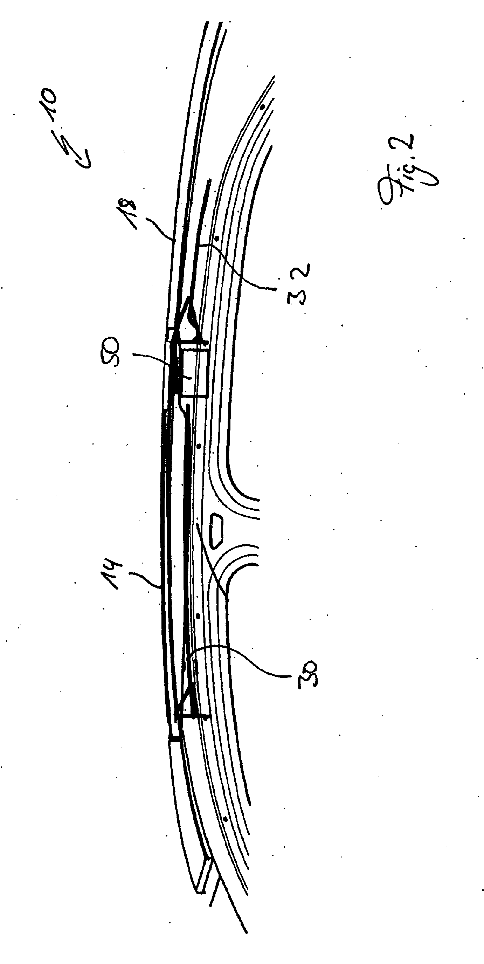

Wie den Figuren 2 bis 4 zu entnehmen ist, wird das Deckelelement 14 beim Freigeben der Dachöffnung 16 mittels der Gleitelemente 24 und 28, die jeweils aktiv mittels der zugeordneten Antriebskabel 38 und 42 angetrieben sind, aus der Schließstellung in die Öffnungsstellung verfahren. Hierbei werden die vorderen Gleitelemente 24 in den im Trockenbereich T angeordneten Führungsschienen 30 nach hinten verfahren. Die hinteren Gleitelemente 28 werden in den im Vergleich zu den vorderen Führungsschienen 30 kürzer ausgebildeten, hinteren Führungsschienen 32 mit einer geringeren Geschwindigkeit nach hinten verfahren. Der Geschwindigkeitsunterschied wird durch die Durchmesser der Ritzel 40 und 44 festgelegt und durch unterschiedliche Abmessungen der Führungsschienen 30 und 32 in Fahrzeuglängsrichtung vorgegeben. Zum Ausgleich des Geschwindigkeitsunterschieds wird das Deckelelement 14 gegenüber dem hinteren Ausstellhebel 26 entlang der deckelfesten Führungsschiene 36 verfahren, welche eine Wegausgleichseinrichtung darstellt.

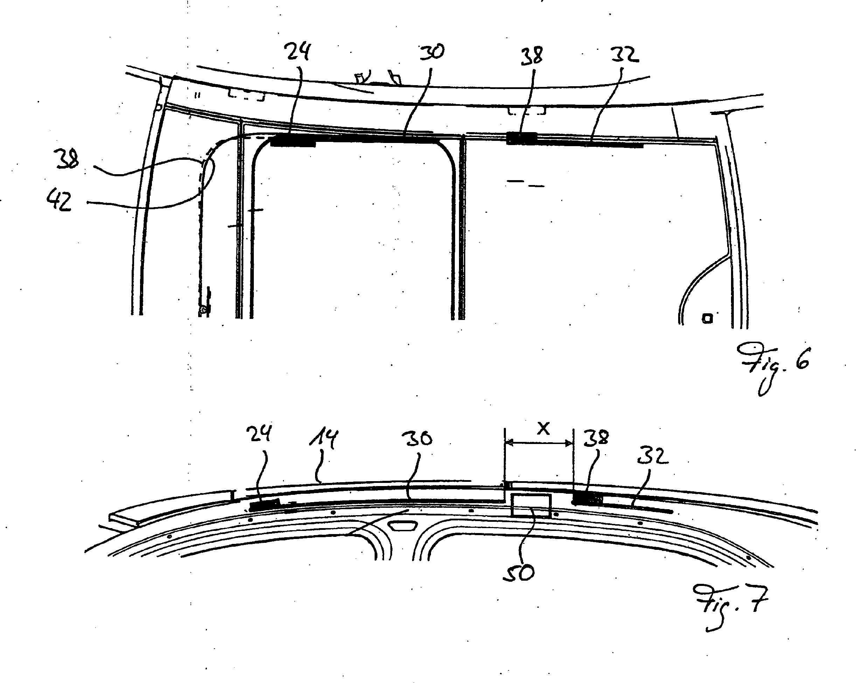

In den Figuren 6 und 7 ist eine zweite Ausführungsform eines Fahrzeugdachs nach der Erfindung dargestellt, das im Wesentlichen demjenigen gemäß den Figuren 1 bis 5 entspricht, sich von diesem aber dadurch unterscheidet, dass die vorderen Führungsschienen 30 für die vorderen Gleitelemente 24 und die hinteren Führungsschienen 32 für die hinteren Gleitelemente 28 miteinander fluchten, das heißt im Wesentlichen in einer Linie liegen. Zwischen den Führungsschienen 30 und 32 liegt ein Zwischenraum, der eine Ersteckung x in Fahrzeuglängsrichtung hat und in welchem das Versteifungselement 50 integriert ist.

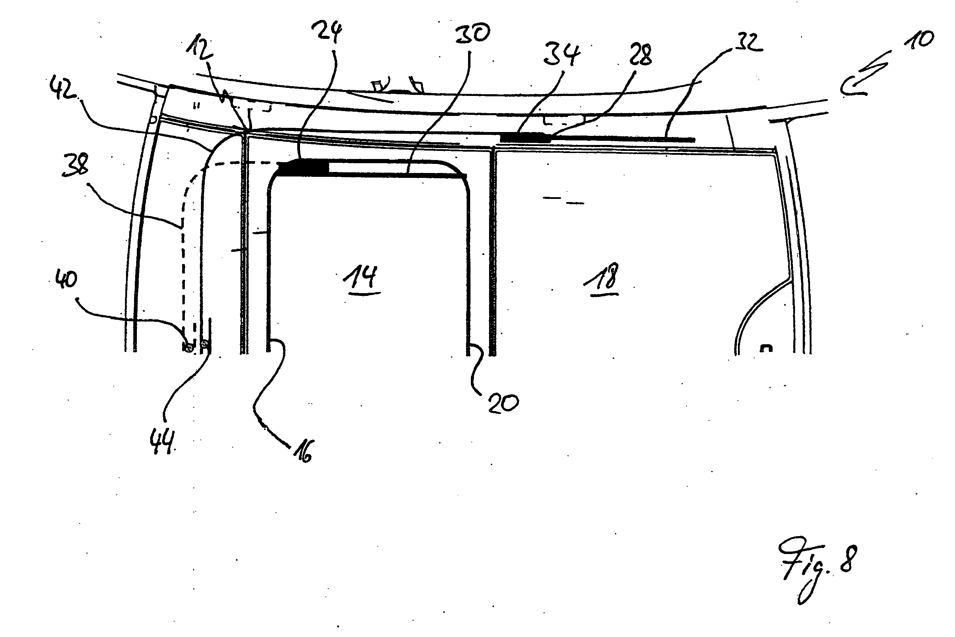

In Fig. 8 ist eine dritte Ausführungsform eines Fahrzeugdachs nach der Erfindung dargestellt, das wiederum im Wesentlichen demjenigen gemäß den Figuren 1 bis 5 entspricht, sich von diesem aber dadurch unterscheidet, dass die Antriebsritzel 40 und 44 jeweils auf einer separaten Antriebswelle sitzen. Diese Antriebswellen können Bestandteil eines Verzeigungsgetriebes sein, das mit einem Antriebsmotor gekoppelt ist oder jeweils mit einem eigenen Antriebsmotor versehen sein.

### Bezugszeichen

- 10: Fahrzeugdach
- 12: Dachöffnungssystem
- 14: Deckelelement
- 16: Dachöffnung
- 18: Dachabschnitt
- 20: Dichtprofil
- 22: vorderer Ausstellhebel
- 24: vorderes Gleitelement
- 26: hinterer Ausstellhebel
- 28: hinteres Gleitelement
- 30: vordere Führungsschiene
- 32: hintere Führungsschiene
- 34: Gleiter
- 36: Führungselement
- 38: Antriebskabel
- 40: Antriebsritzel
- 42: Antriebskabel
- 44: Antriebsritzel
- 46: Antriebsmotor
- 48: Antriebswelle
- 49: Rotationsdichtung
- 50: Versteifungselement

## Patentansprüche

1. Fahrzeugdach mit einem Dachöffnungssystem (12), das ein Deckelelement (14) umfasst, mittels dessen eine Dachöffnung (16) wahlweise verschlossen oder zumindest teilweise freigegeben werden kann und das in Schließstellung mit einer die Dachöffnung (16) umschließenden Trenneinrichtung zusammenwirkt, die einen Nassbereich von einem Trockenbereich trennt, wobei das Deckelelement (14) bezogen auf eine Fahrzeuglängsmittelebene beidseits ein vorderes, angetriebenes Gleitelement (24), welches im Trockenbereich liegt und in einer ersten Führungseinrichtung (30) geführt ist, und ein hinteres Gleitelement (28) umfasst, das im Nassbereich liegt und in einer zweiten Führungseinrichtung (32) geführt ist, **dadurch gekennzeichnet, dass** die hinteren Gleitelemente (28) und die vorderen Gleitelemente (24) mittels eines gemeinsamen Antriebsmotors (46) angetrieben sind und dass die hinteren Gleitelemente (28) zum Verfahren in den zweiten Führungseinrichtungen (32) mittels des Antriebsmotors (46) kopplungsfrei zu den vorderen Gleitelementen (24) aktiv angetrieben sind, wobei die vorderen Gleitelemente (24) und die hinteren Gleitelemente (28) mit dem Antriebsmotor (46) gekoppelt sind, so dass beim Verfahren des Deckelelements (14) sowohl die vorderen Gleitelemente (24) als auch die hinteren Gleitelemente ohne direkte Kopplung zueinander angetrieben werden.

2. Fahrzeugdach nach Anspruch 1, **dadurch gekennzeichnet, dass** die hinteren Gleitelemente (28) jeweils mit einem drucksteifen Antriebskabel (42) verbunden sind, das von dem Antriebsmotor (46) angetrieben ist und das im Nassbereich angeordnet ist.

3. Fahrzeugdach nach Anspruch 1, **dadurch gekennzeichnet, dass** der Antriebsmotor (46) im Trockenbereich liegt und eine Antriebswelle (48) aufweist, die in gedichteter Weise zum Antrieb der hinteren Gleitelemente (28) in den Nassbereich geführt ist.

4. Fahrzeugdach nach Anspruch 3, **dadurch gekennzeichnet, dass** auf der Antriebswelle (48) ein erstes, im Trockenbereich angeordnetes Ritzel (40) zum Antrieb der vorderen Gleitelemente (24) und ein zweites, im Nassbereich angeordnetes Ritzel (44) zum Antrieb der hinteren Gleitelemente (28) sitzen und zwischen dem ersten Ritzel (40) und dem zweiten Ritzel (44) eine Rotationsdichtung (49) angeordnet ist.

5. Fahrzeugdach nach einem der Ansprüche 1 bis 4, **dadurch gekennzeichnet, dass** die vorderen Gleitelemente (24) und die hinteren Gleitelemente (28) beim Verstellen des Deckelelements (14) mit unterschiedlichen Geschwindigkeiten angetrieben sind.

6. Fahrzeugdach nach Anspruch 5, **dadurch gekennzeichnet, dass** die unterschiedlichen Geschwindigkeiten durch die Größe der beiden auf der Antriebswelle (48) des Antriebsmotors (46) sitzenden Ritzel (40, 44) festgelegt sind.

7. Fahrzeugdach nach einem der Ansprüche 1 bis 6, **dadurch gekennzeichnet, dass** die zweiten Führungseinrichtungen (32) für die hinteren Gleitelemente (28) jeweils kürzer als die ersten Führungseinrichtungen (30) für die vorderen Gleitelemente (24) ausgebildet sind und eine Wegausgleichseinrichtung vorgesehen ist.

8. Fahrzeugdach nach Anspruch 7, **dadurch gekennzeichnet, dass** die Wegausgleichseinrichtung bezogen auf die Fahrzeuglängsmittelebene beidseits eine Führungsschiene (36) umfasst, die an dem Deckelelement (14) ausgebildet ist und an der ein mit dem jeweiligen hinteren Gleitelement (28) verbundenes Hebelelement (26) geführt ist.

9. Fahrzeugdach nach einem der Ansprüche 1 bis 8, **dadurch gekennzeichnet, dass** zwischen den ersten Führungseinrichtungen (30) und den zweiten Führungseinrichtungen (32) ein Dachversteifungselement (50) angeordnet ist, das sich in Fahrzeugquerrichtung erstreckt.

10. Fahrzeugdach nach einem der Ansprüche 1 bis 9, **dadurch gekennzeichnet, dass** die Trenneinrichtung (20) ein Dichtprofil ist, das an dem Deckelelement (14) oder dachfest ausgebildet ist.

11. Fahrzeugdach nach einem der Ansprüche 1 bis 10, **dadurch gekennzeichnet, dass** die vordere und die hintere Führungseinrichtung einer Deckelelementseite in Fahrzeuglängsrichtung im Wesentlichen miteinander fluchten.

12. Fahrzeugdach nach einem der Ansprüche 1 bis 11, **dadurch gekennzeichnet, dass** die hinteren Führungseinrichtungen jeweils mit einer Höheneinstelleinrichtung versehen sind, die vorzugsweise mindestens eine Einstellschraube und/oder eine Unterlegscheibe umfasst.

## Claims

1. Vehicle roof having a roof opening system (12) which comprises a cover element (14) by means of which a roof opening (16) can be optionally closed or at least partially opened and which interacts, in the closed position, with a separating device which surrounds the roof opening (16) and separates a wet area from a dry area, wherein the cover element (14) comprises, on both sides with respect to a longitudinal central plane of the vehicle, a front, driven sliding element (24) which lies in the dry area and is guided in a first guide device (30), and a rear sliding element (28) which lies in the wet area and is guided in a second guide device (32), **characterized in that** the rear sliding elements (28) and the front sliding elements (24) are driven by means of a common drive motor (46) and **in that** the rear sliding elements (28) are actively driven by means of the drive motor (46) in a coupling-free fashion with respect to the front sliding elements (24), so that said rear sliding elements (28) move in the second guide devices (32), wherein the front sliding elements (24) and the rear sliding elements (28) are coupled to the drive motor (46) with the result that, when the cover element (14) is moved, both the front sliding elements (24) and the rear sliding elements are driven without direct coupling to one another.

2. Vehicle roof in accordance to Claim 1, **characterized in that** the rear sliding elements (28) are each connected to a drive cable (42) which is rigid in compression, is driven by the drive motor (46) and is arranged in the wet area.

3. Vehicle roof in accordance to Claim 1, **characterized in that** the drive motor (46) lies in the dry area and has a drive shaft (48) which is guided, in a sealed fashion into the wet area in order to drive the rear sliding elements (28).

4. Vehicle roof in accordance to Claim 3, **characterized in that** a first pinion (40), which is arranged in the dry area, for driving the front sliding elements (24), and a second pinion (44), which is arranged in the wet area for driving the rear sliding elements (28) are seated on the drive shaft (48), and a rotational seal (49) is arranged between the first pinion (40) and the second pinion (44).

5. Vehicle roof in accordance to one of claims 1 to 4, **characterized in that** the front sliding elements (24) and the rear sliding elements (28) are driven at different speeds during the adjustment of the cover element (14).

6. Vehicle roof in accordance to Claim 5, **characterized in that** the different speeds are defined by the size of the two pinions (40, 44) which are seated on the drive shaft (48) of the drive motor (46).

7. Vehicle roof in accordance to one of Claims 1 to 6, **characterized in that** the second guide devices (32) for the rear sliding elements (28) are each made shorter than the first guide devices (30) for the front sliding elements (24), and a travel compensation device is provided.

8. Vehicle roof in accordance to Claim 7, **characterized in that** the travel compensation device comprises, on both sides with respect to the longitudinal central plane of the vehicle, a guide rail (36) which is embodied on the cover element (14) and on which a lever element (26), which is connected to the respective rear sliding element (28), is guided.

9. Vehicle roof in accordance to one of Claims 1 to 8, **characterized in that** a roof reinforcement element (50), which extends in the transverse direction of the vehicle, is arranged between the first guide devices (30) and the second guide devices (32).

10. Vehicle roof in accordance to one of Claims 1 to 9, **characterized in that** the separating device (20) is a sealing profile which is formed on the cover element (14) or fixed to the roof.

11. Vehicle roof in accordance to one of Claims 1 to 10, **characterized in that** the front and the rear guide devices of a cover element side are essentially aligned with one another in the longitudinal direction of the vehicle.

12. Vehicle roof in accordance to one of Claims 1 to 11, **characterized in that** the rear guide devices are each provided with a height adjustment device which preferably comprises at least one setting screw and/or washer.

## Revendications

1. Toit de véhicule comprenant un système d'ouverture de toit (12) qui comprend un élément de couvercle (14) au moyen duquel une ouverture de toit (16) peut, de manière sélective, être fermée ou être au moins partiellement ouverte, lequel élément de couvercle coopère dans la position de fermeture avec un dispositif de séparation entourant l'ouverture de toit (16), lequel sépare une région humide d'une région sèche, l'élément de couvercle (14) comprenant, de chaque côté par rapport à un plan médian longitudinal du véhicule, un élément de glissement avant entraîné (24), qui se situe dans la région sèche et qui est guidé dans un premier dispositif de guidage (30), et un élément de glissement arrière (28) qui se situe dans la région humide et qui est guidé dans un deuxième dispositif de guidage (32), **caractérisé en ce que** les éléments de glissement arrière (28) et les éléments de glissement avant (24) sont entraînés au moyen d'un moteur d'entraînement commun (46) et **en ce que** les éléments de glissement arrière (28), pour le déplacement dans les deuxièmes dispositifs de guidage (32), sont entraînés de manière active au moyen du moteur d'entraînement (46) sans accouplement avec les éléments de glissement avant (24), les éléments de glissement avant (24) et les éléments de glissement arrière (28) étant accouplés au moteur d'entraînement (46) de telle sorte que lors du déplacement de l'élément de couvercle (14), les éléments de glissement avant (24) ainsi que les éléments de glissement arrière soient entraînés sans accouplement direct les uns aux autres.

2. Toit de véhicule selon la revendication 1, **caractérisé en ce que** les éléments de glissement arrière (28) sont à chaque fois connectés à un câble d'entraînement (42) résistant à la pression qui est entraîné par le moteur d'entraînement (46) et qui est disposé dans la région humide.

3. Toit de véhicule selon la revendication 1, **caractérisé en ce que** le moteur d'entraînement (46) est situé dans la région sèche et présente un arbre d'entraînement (48) qui est guidé dans la région humide de manière étanchéifiée en vue de l'entraînement des éléments de glissement arrière (28).

4. Toit de véhicule selon la revendication 3, **caractérisé en ce que** sur l'arbre d'entraînement (48) sont montés un premier pignon (40) disposé dans la région sèche pour l'entraînement des éléments de glissement avant (24) et un deuxième pignon (44) disposé dans la région humide pour l'entraînement des éléments de glissement arrière (28) et un joint d'étanchéité rotatif (49) est disposé entre le premier pignon (40) et le deuxième pignon (44).

5. Toit de véhicule selon l'une quelconque des revendications 1 à 4, **caractérisé en ce que** les éléments de glissement avant (24) et les éléments de glissement arrière (28) sont entraînés à des vitesses différentes lors du déplacement de l'élément de couvercle (14).

6. Toit de véhicule selon la revendication 5, **caractérisé en ce que** les différentes vitesses sont fixées par la taille des deux pignons (40, 44) montés sur l'arbre d'entraînement (48) du moteur d'entraînement (46).

7. Toit de véhicule selon l'une quelconque des revendications 1 à 6, **caractérisé en ce que** les deuxièmes dispositifs de guidage (32) pour les éléments de glissement arrière (28) sont réalisés à chaque fois de manière plus courte que les premiers dispositifs de guidage (30) pour les éléments de glissement avant (24) et **en ce qu'**il est prévu un dispositif de compensation de course.

8. Toit de véhicule selon la revendication 7, **caractérisé en ce que** le dispositif de compensation de course comprend, de chaque côté par rapport au plan médian longitudinal du véhicule, un rail de guidage (36) qui est réalisé sur l'élément de couvercle (14) et sur lequel est guidé un élément de levier (26) connecté à l'élément de glissement arrière respectif (28).

9. Toit de véhicule selon l'une quelconque des revendications 1 à 8, **caractérisé en ce qu'**entre les premiers dispositifs de guidage (30) et les deuxièmes dispositifs de guidage (32) est disposé un élément de renforcement du toit (50) qui s'étend dans la direction transversale du véhicule.

10. Toit de véhicule selon l'une quelconque des revendications 1 à 9, **caractérisé en ce que** le dispositif de séparation (20) est un profilé d'étanchéité qui est réalisé sur l'élément de couvercle (14) ou de manière fixée au toit.

11. Toit de véhicule selon l'une quelconque des revendications 1 à 10, **caractérisé en ce que** le dispositif de guidage avant et le dispositif de guidage arrière d'un côté de l'élément de couvercle sont essentiellement en affleurement l'un avec l'autre dans la direction longitudinale du véhicule.

12. Toit de véhicule selon l'une quelconque des revendications 1 à 11, **caractérisé en ce que** les dispositifs de guidage arrière sont à chaque fois munis d'un dispositif d'ajustement en hauteur qui comprend de préférence au moins une vis d'ajustement et/ou une rondelle.
